# EUROPEAN PATENT APPLICATION

(11) **EP 4 234 341 A1**
(43) Date of publication of application: **30.08.2023**
(21) Application number: 22158953.4
(22) Date of filing: 25.02.2022
(51) Int. Cl.: B60R 19/18

(54) **CLOSED CROSSMEMBER CONSTRUCTION COMPRISING TWO ELONGATED PROFILES**

(71) Applicant: AUTOTECH ENGINEERING S.L., 48340 Amorebieta-Etxano, Bizkaia (ES)
(72) Inventor: Muskos, Per, 972 51 Luleå (SE)
(74) Representative: Ehrner & Delmar Patentbyrå AB

(57) **Abstract**

The invention relates to vehicle crossmember (1, 1', 1") comprising a first and a second profile (10a, 10b) that are joined to each other, wherein each profile (10) has a generally symmetric shape in the longitudinal direction, enabling the profiles (10a, 10b) to be tightly fitted together along their length with the profiles (10a, 10b) mutually rotated 180° around their length, and wherein the first and the second elongated profile (10a, 10b) are attached to each other along a first and a second mutual attachment interface (21, 22) extending along the length of the profiles (10a, 10b) in said mutually rotated position. Each profile (10) has an L-shaped cross section comprised of a first web portion (11) and a second web portion (12), which is shorter than the first web portion (11) and extends at an angle with respect to the first web portion (11) in a longitudinal direction of the profile (10), wherein the first and the second profiles (10a, 10b) are joined to form a crossmember (1, 1', 1") with a closed inner space (16) between the first and the second profiles (10a, 10b).

## Description

### TECHNICAL FIELD

The invention relates to a crossmember for a bumper beam to be mounted on a vehicle. Specifically, the invention relates to such a crossmember comprised of two elongated profiles that are attached to each other. Further the invention relates to a method of producing such a crossmember.

### BACKGROUND

In the automotive industry two important features regarding all components that become part of the body in white (biw) of the vehicle are weight and production efficiency. With respect to production efficiency, it is desired to minimise the cost and number of steps involved in the whole production of each component.

A product that is crucial for the safety in a vehicle is the bumper beam, which in most collisions is the part that takes the first hit. Therefore, it is vital that the bumper beam is constructed to efficiently absorb collision forces regardless of the exact position of the main impact point on the bumper beam.

Further though, the bumper beam should be as light as possible to keep down the weight of the vehicle, and it should preferable be produced in a cost-efficient manner. A crossmember may have either a closed profile, or an open profile, of which the most common type or crossmembers with a cross sectional hat profile. In general, a closed profile may be advantageous in that it represents a stronger construction. A drawback is however that it is more complicated to produce a closed profile and that it generally takes more material, and hence adds more weight to body in white of the vehicle.

The invention is based on an idea to produce a relatively light-weight closed crossmember for a bumper beam in a new and cost-efficient manner.

In US 2007/0176440 A1 a vehicle bumper is disclosed, which is produced from two substantially similar U-shaped profiles, which are joined to each other to form a closed crossmember of the vehicle bumper.

A drawback of the vehicle bumper disclosed in US 2007/0176440 A1 is that it will be relatively heavy in view of the overlapping parts of the two U-shaped profiles and that despite the relatively high weight, it will not have in optimal shape in view of shock absorption in a collision.

It would be advantageous to achieve a crossmember for a bumper beam overcoming, or at least alleviating, at least one or some of the drawbacks of the prior art. In particular, it would be advantageous to provide a light-weight crossmember for a bumper beam that it is possible to produce in cost-efficient manner.

### SUMMARY OF THE INVENTION

It is an object of the invention to provide a light-weight crossmember for a bumper beam with a structure that is possible to produce in cost-efficient manner, specifically by combining two similar profiles into a light-weight crossmember.

According to a first aspect, the invention relates to a vehicle crossmember comprising a first and a second profile that are joined to each other,
wherein each profile has a generally symmetric shape in the longitudinal direction, enabling the profiles to be tightly fitted together along their length with the profiles mutually rotated 180° around their length,
and wherein the first and the second elongated profile are attached to each other along a first and a second mutual attachment interface extending along the length of the profiles in said mutually rotated position,
wherein each profile has an L-shaped cross section comprised of a first web portion and a second web portion, which extends at an angle with respect to the first web portion in a longitudinal direction of the profile, and wherein the first and the second profiles are joined to form a crossmember with a closed inner space running between the first and the second profiles along the length of the crossmember.

Advantages of the inventive crossmember are inter alia that the crossmember may be produced in a cost-efficient manner with relatively few operational steps and that the final product will have a beneficial strength to weight ratio. The production will be effective in that both profiles may be produced in the same form and in that they may even be identical, such the no specific after treatment will be needed for either of the profiles.

According to a second aspect the invention relates to a method of producing a crossmember as described above, comprising the steps of
- providing first and a second elongated profile with an L-shaped cross section comprised of a first web portion a second web portion extending at an angle with respect to each other in a longitudinal direction of the profile,
- rotating one of the first and the second elongated profiles with respect to the other,
- attaching the first and the second elongated profiles to each other in the mutually rotated positions to form an at least partly closed section.

Other embodiments and advantages will be apparent from the detailed description and the appended drawings.

### BRIEF DESCRIPTION OF THE DRAWINGS

Below, specific embodiments of the invention will be described with reference to the appended drawings, of which,
- Fig. 1: is a frontside perspective view of a crossmember according to a first embodiment,
- Fig. 2: is a backside perspective view of the crossmember of Fig. 1,
- Fig. 3: is an end view of the crossmember of Fig. 1 from a first end,
- Fig. 4: is an end view of the crossmember of Fig. 1 from a second end, opposite the first end,
- Fig. 5: is a cross sectional view of the crossmember of Fig. 1,
- Fig. 6: is a front view of the crossmember of Fig. 1,
- Fig. 7a-c: are cross sectional views of the crossmember along the lines a-a, b-b, and c-c, respectively, as illustrated in Fig. 6,
- Fig. 8: is a frontside perspective view of a crossmember according to a second embodiment,
- Fig. 9: is a frontside perspective view of a crossmember according to a third embodiment,
- Fig. 10: is an end view of the crossmember of Fig. 8 from a first end,
- Fig. 11: is an end view of the crossmember of Fig. 8 from a second end, opposite the first end,
- Fig. 12: is a cross sectional view of the crossmember of Fig. 8, and
- Fig. 13-15: are perspective views illustrating methods of attaching two profiles into a crossmember by welding.

### DETAILED DESCRIPTION OF THE SHOWN EMBODIMENTS

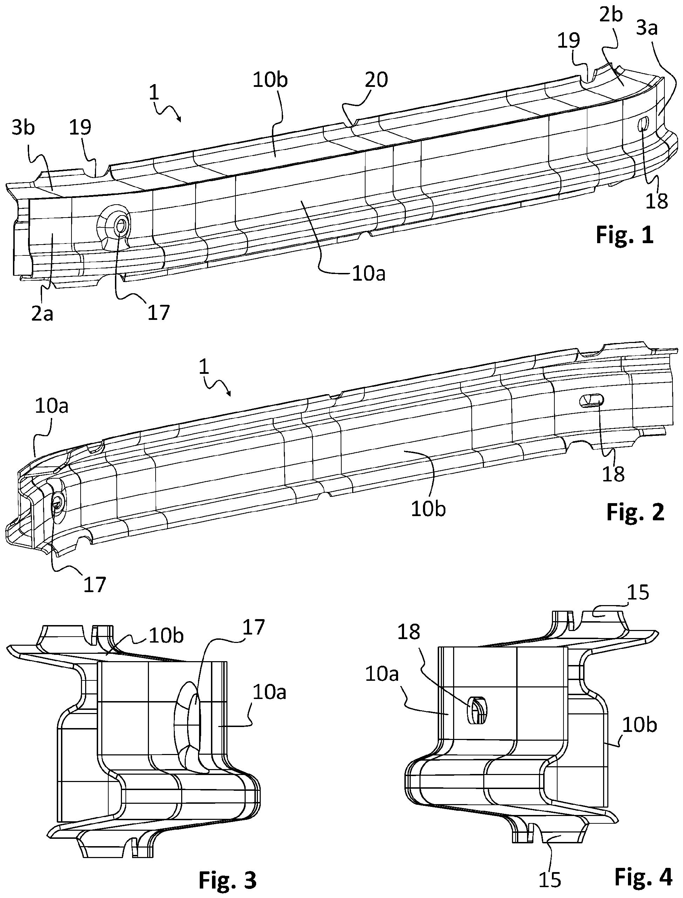

In Figs. 1-7 a vehicle crossmember 1 according to a first embodiment is shown.

The crossmember 1 comprises a first and a second profile 10a, 10b that are joined to each other.

Each profile 10 has a generally symmetric shape in the longitudinal direction, enabling the profiles 10a, 10b to be tightly fitted together along their length with the profiles 10a, 10b mutually rotated 180° around their length, such that a first longitudinal outer end 2a of the first elongated profile 10a will be facing an opposite, second longitudinal outer end 3b of the second elongated profile 10b, and a second longitudinal outer end 3a of the first elongated profile 10a will be facing an opposite, first longitudinal outer end 2b of the second elongated profile 10b.

Each profile 10 has an L-shaped cross section comprised of a first web portion 11 and a second web portion 12, which may be shorter than the first web portion 11 and which extends at an angle with respect to the first web portion 11 in a longitudinal direction of the profile 10. Typically, the angle between the first web portion 11 and a second web portion 12 is about 90° and may be slightly more than 90°. In specific embodiments the angle is greater than 80°. Also, in embodiments, the angle between the first web portion 11 and a second web portion 12 is smaller than 120°.

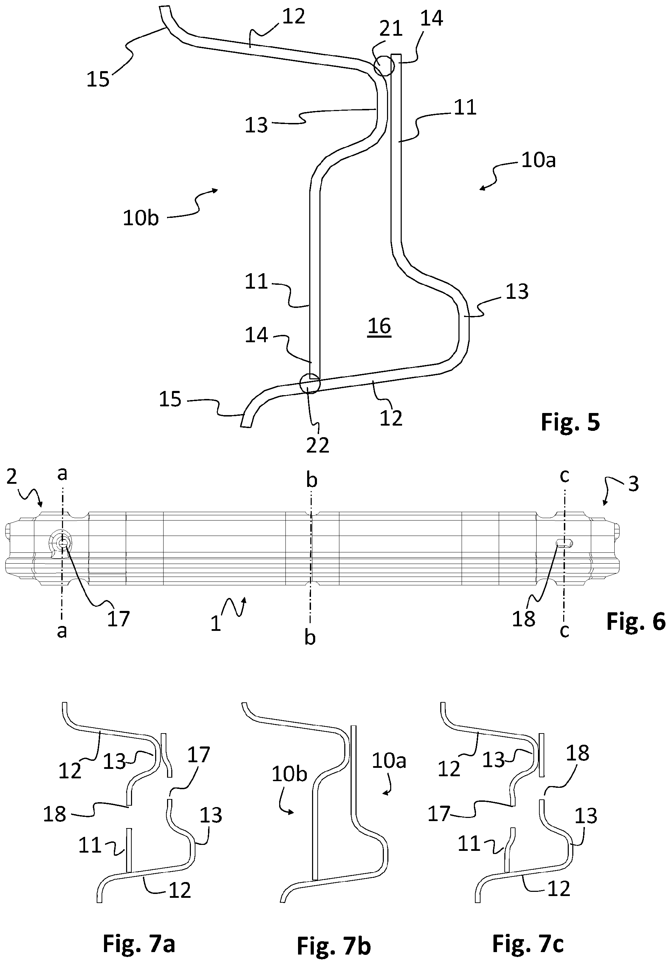

As is illustrated in Fig. 5 the first and the second elongated profile 10a, 10b are attached to each other along a first and a second mutual attachment interface 21, 22 along the length of the profiles 10a, 10b. Typically, the profiles 10a, 10b are welded to each other along the first and a second mutual attachment interface 21, 22. Therefore, in the drawings, the attachment interfaces 21 and 22 are illustrated as attachment means typically in the form of welds, solders, or glue lines at an accessible side of the attachment interfaces. In the shown embodiments the attachment interfaces 21, 22 form contact surfaces of varying extension, wherein the extension of the contact surface at the first attachment interface 21 is wider than that of the second attachment interface 22, and wherein the attachment means are positioned at an accessible side of the respective attachment interfaces.

Further, the first and the second profiles 10a, 10b are joined to form a crossmember 1 with a closed inner space 16, running along the length of the crossmember 1, between the first and the second profiles 10a, 10b.

As is illustrated in Fig. 5, an end portion 14 of the first web portion 11 of the second elongated profile 10b is attached to the second web portion 12 of the first elongated profile 10a. As a consequence, the closed inner space 16 is formed between the first web portion 11 of the first elongated profile 10a, the first web portion 11 of the second elongated profile 10b, and at least a part of the second web portion 12 of the first elongated profile 10a.

The outer portion of the crossmember 1 facing the outside of the vehicle when mounted thereon is formed by the first elongated profile 10a, and an inner portion of the crossmember 1 facing the inside of the vehicle when mounted thereon is formed by the second elongated profile 10b. As described above, this is achieved in that one of the profiles are rotated 180° with respect to the other.

In the shown embodiments each profile 10 comprises a longitudinal bulge 13 at the intersection between the first web portion 11 and the second web portion 12, i.e. at the angle between the web portions. In embodiments, the bulge 13 of the second elongated profile 10b is attached to the first web portion 11 of the first elongated profile 10a. Specifically, the bulge 13 of the second elongated profile 10b is attached to an end portion 14 of the first web portion 11 of the first elongated profile 10a.

In non-illustrated embodiments of the invention profiles without bulges may be provided. In such embodiments the profiles may be attached to each other in angle with respect to each other that allows the formation of a space between the profiles throughout their length.

In the shown embodiments, the second web portion 12 of each profile 10 has an outer flange that is denoted a second flange 15 in view of the it extends from the second web portion 12. The second flange 15 extends away from the first web portion 11 to extend in substantially a vertical direction when arranged on a vehicle. The profiles 10a, 10b are attached to each other such that the second flange 15 of each profile 10 is facing the vehicle when arranged on a vehicle. Specifically, the second flange may be configured to be attached to a crash box of a vehicle body in white.

Figs 7a-c are cross sectional views taken along the lines a-a, b-b, and c-c, respectively in Fig. 6. As is shown in Fig. 6, each profile 10 has a generally symmetric shape in the longitudinal direction, enabling the profiles 10a, 10b to be tightly fitted together along their length with the profiles 10a, 10b mutually rotated 180° around their length.

However, the profiles do not need to be perfectly symmetrical. As is illustrated in Fig. 6, both profiles of the crossmember 1 is provided with a towing hole 17 at the first longitudinal end 2 thereof configured to support a towing tube (not shown) and allow access for arranging a towing hook (not shown). In the opposite, second longitudinal end 3 of the profile no such towing hole for supporting a towing tube is needed, but in order to provide access for arranging a towing hook, a through hole 18 is arranged.

As is shown in Fig. 7a the towing hole 17 is formed in a support portion in the form of a bulge configured to provide a support for the towing tube. As is illustrated in Fig. 7c, the bulge is such arranged that it will not interfere with the fit between the profiles. Typically, this is achieved in that the longitudinally extending bulge 13, has a greater extension than the bulge of the towing hole 17 such that the bulge of the towing hole 17 may be fitted inside the space 16 formed between the first and the second profiles.

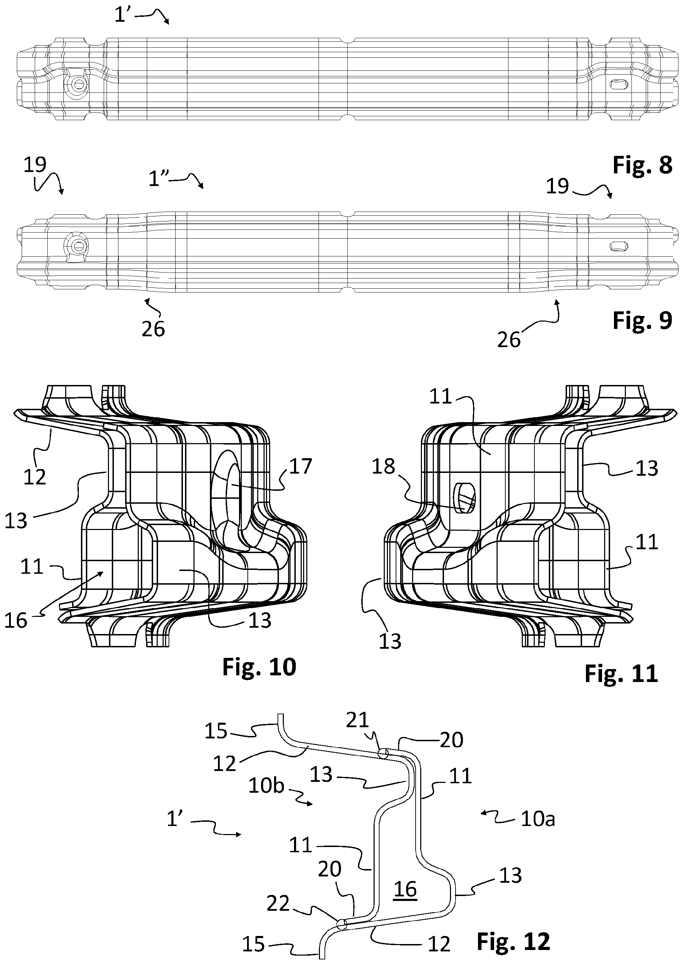

In figures 8 and 10-12 a crossmember 1' according to a second embodiment is shown, in which the first web portion 11 of each profile 10 has an outer flange, which is denoted a first flange 20. The first flange 20 extends from the first web portion 11 at an angle with respect thereto. When a first profile 10a is joined with a second profile 10b, the first flange 20 of the first profile 10a extends substantially alongside and in parallel with the second web portion 12 of the second profile 10b. The first flange 20 will thus provide an increased contact surface between the profiles 10a and 10b, preferably at both contact surfaces as is illustrated in Fig 12, at one end as an outer part (above in the drawing), and in the opposite end as an inner part (below in the drawing).

The elongated profiles 10 are joined to each other by welding along the two attachment interfaces 21, 22. For the embodiment shown in Fig. 12, a weld is preferably provided along the attachment interfaces 21 and 22 formed between on outer edge of the first flange 20 and a portion of the second web portion 12 of the opposite profile.

As is illustrated e.g. in Figs 10-11, each profile 10a, 10b has a slightly curved shape, at least at the longitudinal ends 19 thereof, to form a convex outer surface when arranged on a vehicle.

In Fig. 9 a crossmember 1" according to a third embodiment is illustrated, in which the longitudinal ends 19 of the profiles are tapered. In the shown embodiment this achieved by means of two opposed tapering portions 26, in which the height of the profiles 10 decreases, such that the longitudinal ends 19 of the crossmember is lower than the central main section of the crossmember 1".

Specifically, the first web portion 11 of each elongated profile 10 has a curved shape, wherein the first web portion 11 of the first elongated profile 10a is configured to constitute an outer vertical surface of the crossmember 1 when arranged on a vehicle. Hence, first web portion 11 of each elongated profile 10 is configured to extend substantially vertically when arranged on a vehicle, and the second web portion 12 of each elongated profile 10 is configured to extend substantially horizontally when arranged on a vehicle.

The elongated profiles 10 of the crossmember are advantageously formed from hot or cold formed plates of a metal or a metal alloy. The elongated profiles 10 may by formed from stainless steel or aluminium.

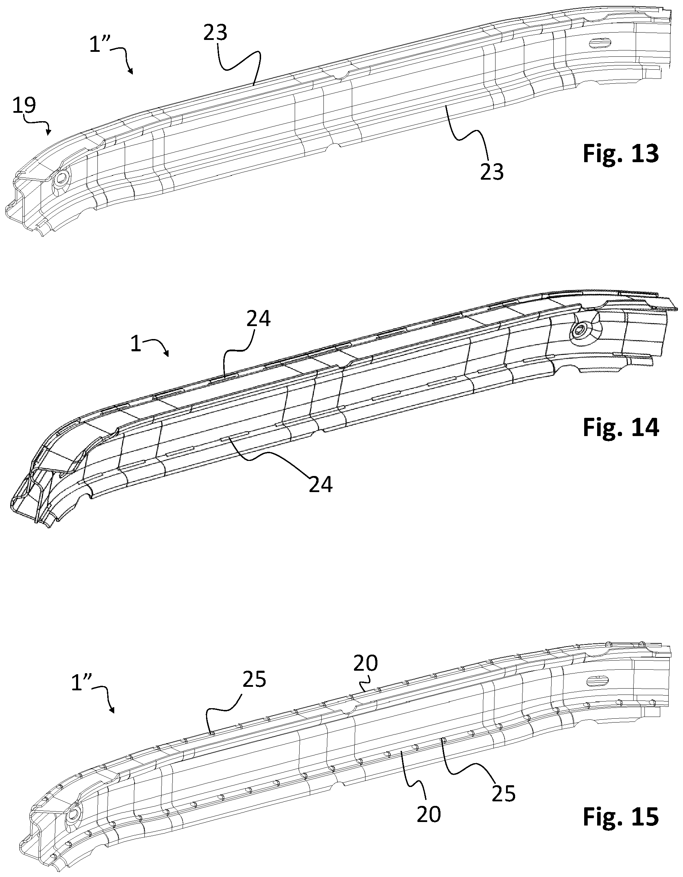

In Figs. 13-15, three different manners of attaching the profiles to each other by welding are illustrated.

In Fig. 13 a crossmember 1" in accordance with the third embodiment, with tapered end portions 19 is illustrated, in which the profiles have been attached to each other by means of continuous welds 23.

In Fig. 14 a crossmember 1 in accordance with the first embodiment is illustrated, in which the profiles have been attached to each other by means of intermittent welds 24.

In Fig. 15 a crossmember 1" in accordance with the third embodiment, with tapered end portions 19 is illustrated, in which the profiles have been attached to each other by means of spot welds 25 at the first flanges 20 of each profile.

Of course, regardless of the embodiment of the crossmember the L-shaped profiles may be attached to each other by means of soldering, laser welding, continuous welds, intermittent welds, and/or spot welds.

The method of producing the crossmember according to the shown embodiments and other embodiments comprised in the scope of the invention, is efficient in view of that the crossmember may be achieved by combining two similar or identical profiles into a crossmember with a closed profile and a high strength to weight ratio.

The method typically comprises the following steps:
Firstly, a first and a second elongated profile 10a, 10b are provided, both profiles having an L-shaped cross section comprised of a first web portion 11 and a second web portion 12 extending at an angle with respect to each other in a longitudinal direction of the profile 10.

Preferably, the L-shaped profiles 10a, 10b are produced by hot or cold forming plates of a metal or a metal alloy. Specifically, as the L-shaped profiles may be identical, they may be formed in the same or a similar forming tool, thereby reducing the production costs. As an alternative though, the L-shaped profiles may be formed by extrusion, rolling or any other conventional metal forming method.

One of the first and the second elongated profiles 10a, 10b is then rotated with respect to the other. Specifically, the profiles 10a, 10b are mutually rotated 180° around their length, such that a first longitudinal outer end 2a of the first elongated profile 10a will be facing an opposite, second longitudinal outer end 3b of the second elongated profile 10b, and a second longitudinal outer end 3a of the first elongated profile 10a will be facing an opposite, first longitudinal outer end 2b of the second elongated profile 10b.

Subsequently the first and the second elongated profiles 10a, 10b are attached to each other in the mutually rotated positions to form an at least partly closed section. Preferably they are attached to each other by means of welding along two longitudinal attachment interfaces 20, 21 along the length of the thus formed crossmember.

Above, the invention has been described with reference to specific embodiments. The invention is however not limited to these embodiments. It is obvious to a person skilled in the art that other embodiments are possible within the scope of the following claims. For instance, it should be noted that the invention encompasses every possible combination of the shown embodiments.

## Claims

1. A vehicle crossmember (1, 1', 1") comprising a first and a second profile (10a, 10b) that are joined to each other,
wherein each profile (10) has a generally symmetric shape in the longitudinal direction, enabling the profiles (10a, 10b) to be tightly fitted together along their length with the profiles (10a, 10b) mutually rotated 180° around their length,
and wherein the first and the second elongated profile (10a, 10b) are attached to each other along a first and a second mutual attachment interface (21, 22) extending along the length of the profiles (10a, 10b) in said mutually rotated position,
**characterised in that** each profile (10) has an L-shaped cross section comprised of a first web portion (11) and a second web portion (12), which extends at an angle with respect to the first web portion (11) in a longitudinal direction of the profile (10),
wherein the first and the second profiles (10a, 10b) are joined to form a crossmember (1, 1', 1") with a closed inner space (16) running between the first and the second profiles (10a, 10b) along the length of the crossmember (1, 1', 1").

2. The crossmember (1, 1', 1") according to claim 1, wherein an end portion (14) of the first web portion (11) of the second elongated profile (10b) is attached to the second web portion (12) of the first elongated profile (10a), and wherein the closed inner space (16) is formed between the first web portions (11) of the respective elongated profile (10a, 10b) and at least a part of the second web portion (12) of the first elongated profile (10a).

3. The crossmember (1, 1', 1") according to claim 1 or 2, wherein an outer portion (2) of the crossmember (1) facing the outside of the vehicle when mounted thereon is formed by the first elongated profile (10a), and an inner portion (3) of the crossmember (1, 1', 1") facing the inside of the vehicle when mounted thereon is formed by the second elongated profile (10b).

4. The crossmember (1, 1', 1") according to anyone of the preceding claims, wherein each profile (10) comprises a longitudinal bulge (13) at an intersection between the first web portion (11) and the second web portion (12), wherein the bulge (13) of the second elongated profile (10b) is attached to the first web portion (11) of the first elongated profile (10a).

5. The crossmember (1, 1', 1") according to claim 4, wherein the bulge (13) of the second elongated profile (10b) is attached to an end portion (14) of the first web portion (11) of the first elongated profile (10a).

6. The vehicle crossmember (1', 1") according to any of the preceding claims wherein the first web portion (11) of each profile (10) has a first flange (20) that extends at an angle with respect to the first web portion (11) to extend substantially alongside the second web portion (12) when arranged on a vehicle.

7. The crossmember (1, 1', 1") according to anyone of the preceding claims, wherein the second web portion (12) of each profile (10) has a second flange (15) that extends away from the first web portion (11) to extend in substantially a vertical direction when arranged on a vehicle.

8. The crossmember (1, 1', 1") according to claim 7, wherein the profiles (10a, 10b) are attached to each other such that the second flange (15) of each profile (10) is facing the vehicle when arranged on a vehicle.

9. The crossmember (1, 1', 1") according to anyone of the preceding claims, wherein each profile (10a, 10b) has a slightly curved shape, at least at the longitudinal ends (19) thereof, to form a convex outer surface when arranged on a vehicle.

10. The crossmember (1, 1', 1") according to claim 9, wherein the first web portion (11) of each elongated profile (10) has a curved shape, and wherein the first web portion (11) of the first elongated profile (10a) is configured to constitute an outer vertical surface of the crossmember (1) when arranged on a vehicle.

11. The crossmember (1, 1', 1") according to anyone of the preceding claims, wherein the elongated profiles (10) are joined to each other by welding along the two attachment interfaces (21, 22).

12. The crossmember (1, 1', 1") according to any of the preceding claims wherein the elongated profiles (10) are formed from hot or cold formed plates of a metal or a metal alloy.

13. The vehicle crossmember (1, 1', 1") according to anyone of the preceding claims, wherein the elongated profiles (10) are formed from stainless steel or aluminium.

14. Method of producing a crossmember in accordance with any of the preceding claims, **characterised by**
- providing first and a second elongated profile (10a, 10b) with an L-shaped cross section comprised of a first web portion (11) a second web portion (12) extending at an angle with respect to each other in a longitudinal direction of the profile (10),
- rotating one of the first and the second elongated profiles (10a, 10b) with respect to the other, such that a first longitudinal outer end (2a) of the first elongated profile 10a will be facing an opposite, second longitudinal outer end (3b) of the second elongated profile (10b), and a second longitudinal outer end (3a) of the first elongated profile (10a) will be facing an opposite, first longitudinal outer end (2b) of the second elongated profile (10b),
- attaching the first and the second elongated profiles (10a, 10b) to each other in the mutually rotated positions to form an at least partly closed section.
